# EUROPEAN PATENT APPLICATION

(11) **EP 4 807 822 A1**
(43) Date of publication of application: **16.09.2026**
(21) Application number: 25196557.0
(22) Date of filing: 18.08.2025
(51) Int. Cl.: H01M 8/0258, H01M 8/0267, H01M 8/2457, H01M 8/2483, H01M 8/10

(54) **FUEL CELL STACK ASSEMBLY COMPRISING BIPOLAR PLATES WITH AN ARRAY OF FLOW DISTRIBUTORS**

(30) Priority: 11.03.2025 IN 202541022097
(71) Applicant: L & T Technology Services Limited, Chennai 600089 (IN)
(72) Inventor: Selvaraj, Nishanth, 641004 Coimbatore (IN)
(74) Representative: Beck Greener LLP

(57) **Abstract**

A fuel cell stack assembly is disclosed. The fuel cell stack assembly comprises a plurality of stacked cells, each including an anode bipolar plate and a cathode bipolar plate. The anode bipolar plate has a first flow field side, while the cathode bipolar plate features a second and an opposing third flow field side. Each flow field side is containing an array of flow distributors, formed by alternating at least one column of first triads and second triads. A membrane electrode assembly is interposed between the anode's first flow field side and the cathode's second flow field side. The alternating triads within the predefined pathway enhance the uniform distribution of a first reactant fluid and a second reactant fluid across the membrane electrode assembly, enabling an efficient electrochemical reaction in the fuel stack. This configuration ensures optimal reactant utilization, enhanced performance, and improved water management within the fuel cell system.

## Description

Present disclosure relates to a field of electrochemical reaction cells. More particularly, aspects of the present disclosure relate to fuel cells and stack assembly, and one or more bipolar plates defined with array of flow distributors that are formed by alternating column arrangement of different configuration of triads.

Fuel cells convert chemical energy of fuel and oxidant into electrical energy and water. Typically, fuel cells are used in space, transportation, material handling, power backup systems and many other applications to generate continuous electric power. Fuel cells include at least two electrodes designated as an anode and a cathode which are separated by an electrolyte media. Fuel cells are classified based on the type of electrolyte media used, one of the type include polymer electrolyte membrane (PEM) fuel cells. Usually, an anode electrode layer and a cathode electrode layer have a catalyst material coating to promote electrochemical reaction. The polymer electrolyte membrane, an anode electrode layer and a cathode electrode layer are jointly called a membrane electrode assembly (MEA). For the operation of the fuel cell, a solid, gas impermeable plates generally known as bipolar plates are employed. The bipolar plates comprise a plurality of flow field channels that facilitates to supply fuel and oxidant to anode and cathode, respectively.

Conventionally, the fuel cell employs bipolar plates which comprise a flow field zone configured with the plurality of flow field channels designed to supply reactants (fuel and oxidant) through an inlet to the membrane electrode assembly (MEA). These conventional bipolar plates are defined with different configuration of the flow field channels and have several disadvantages such as considerable pressure drop and water flooding. Thus, in a conventional configuration of the flow field channels, the gas entering from inlet and exiting from the outlet, there is a difference in the pressure. Additionally, due to nonuniform pressure distribution across the flow filed channels, there is another concern related to water flooding as there are limited flow paths available for water to drain away from flow field zone. This affects the operational efficiency and durability of the fuel cell stack.

Furthermore, conventional fuel cell includes one or more unit cells in a stacked configuration, however, dissipation of heat that is generated in these conventional fuel cell stacks is challenging, as conventional fuel cell cannot be used for high-capacity power output due to higher amount of heat generation and corresponding need to effectively remove the heat from stack to maintain uniform temperature distribution. Therefore, there exists a need to develop an improved flow filed zones in the bipolar plates in the fuel stack which minimizes water retention and flooding and aids in maintaining uniform pressure distribution across the fuel cell stack and thereby ensuring improved functionality.

In an embodiment, a fuel cell stack assembly is disclosed. The fuel cell stack assembly comprises a plurality of cells arranged in a stacked configuration and each cell of the plurality of cells comprises an anode bipolar plate and a cathode bipolar plate. The anode bipolar plate is having a first flow field side, and the cathode bipolar plate is having a second flow field side and a third flow field side opposing to the second flow field side. Each of the first flow field side of anode bipolar plate, the second flow field side and the third flow field side of cathode bipolar plate are defined with a predefined pathway comprising an array of flow distributors. The array of flow distributors is formed by alternating at least one column of first triads and at least one column of second triads. The plurality of cells further includes a membrane electrode assembly interposed between the first flow field side of the anode bipolar plate and the second flow field side of the cathode bipolar plate. This alternating arrangement of the first triads and second triads within the predefined pathway of the anode bipolar plate and cathode bipolar plate facilitates uniform distribution of a first reactant fluid and a second reactant fluid across the membrane electrode assembly for an electrochemical reaction in the fuel stack.

According to an aspect of the present invention, there is provided a fuel cell stack assembly comprising: a plurality of cells arranged in a stacked configuration, wherein each cell of the plurality of cells comprises: an anode bipolar plate having a first flow field side; a cathode bipolar plate having a second flow field side and a third flow field side opposing the second flow field side, wherein each of the first flow field side of anode bipolar plate, the second flow field side and the third flow field side of cathode bipolar plate are defined with a predefined pathway comprising an array of flow distributors, wherein the array of flow distributors are formed by alternating at least one column of first triads and at least one column of second triads; and a membrane electrode assembly interposed between the first flow field side of the anode bipolar plate and the second flow field side of the cathode bipolar plate, wherein an alternating arrangement of the first triads and second triads within the predefined pathway of the anode bipolar plate and cathode bipolar plate facilitate uniform distribution of a first reactant fluid and a second reactant fluid across the membrane electrode assembly for an electrochemical reaction in the fuel stack.

In an embodiment, the first triad is defined with a configuration having two leading edges and one trailing edge, wherein the two leading edges of the first triad are provided with a slot that opens towards peripheral sides of the first triad.

In an embodiment, the slot is defined with an inner surface having a curved divergent profile, wherein the inner surface provides a surface area for heat transfer and prevent accumulation of water generated during the electrochemical process.

In an embodiment, the second triad is defined with a configuration having one leading edge and two trailing edges.

In an embodiment, the first triad comprises an upper surface formed by an inclined portion at the trailing edge and a flat portion at the two leading edges and the second triad comprises an upper surface formed by an inclined portion at the leading edge and a flat portion at the two leading edges, wherein the upper surface of the first triad and the second triad abuts with the membrane electrode assembly.

In an embodiment, each of the anode bipolar plate comprises: the first flow field side to facilitate a supply and removal of the first reactant fluid; a first inlet port in fluid communication with the first flow field side, configured to receive the first reactant fluid and distribute through at least one inlet header; a first outlet port in fluid communication with the first flow field side configured to discharge unreacted first reactant fluid at the first flow field side from at least one outlet header; and auxiliary first inlet ports, and auxiliary first outlet ports are defined on the anode plate remain inactive; and the cathode bipolar plate (20) comprises; the second flow field side to supply and removal of a second reactant fluid, wherein the second flow field side comprises; a second inlet port in fluid communication with the second flow field side is configured to receive the second reactant fluid and distribute through at least one inlet header; a second outlet port in fluid communication with the second flow field side (20a) is configured to collect and discharge redundant second reactant fluid and derived products through at least one outlet header; auxiliary second inlet ports, and auxiliary second outlet ports defined at the second flow field side of the cathode plate remain inactive; and the third flow field side of the cathode bipolar plate to supply and discharge a coolant for regulating thermal conditions within the fuel cell stack, wherein the third flow field side comprises; a third inlet port in fluid communication with the third flow field side, configured to receive the coolant and distribute through at least one coolant inlet header; a third outlet port in fluid communication with the third flow field side, configured to collect and discharge heated coolant through at least one coolant outlet header; and auxiliary third inlet ports, and auxiliary third outlet ports defined at the third flow field side of the cathode plate remain inactive.

In an embodiment, each of the anode bipolar plates comprises the first flow field side to facilitate a supply and removal of the first reactant fluid. A first inlet port is in fluid communication with the first flow field side and configured to receive the first reactant fluid and distribute through at least one inlet header. A first outlet port is in fluid communication with the first flow field side and configured to discharge unreacted first reactant fluid at the first flow field side from at least one outlet header. Further, auxiliary first inlet ports and auxiliary first outlet ports are defined on the anode plate which remain inactive.

In an embodiment, each of the cathode bipolar plates comprise the second flow field side to supply and removal of a second reactant fluid. The second flow field side comprises a second inlet port in fluid communication with the second flow field side and is configured to receive the second reactant fluid and distribute through at least one inlet header. A second outlet port is in fluid communication with the second flow field side is configured to collect and discharge redundant second reactant fluid and derived products through at least one outlet header. Further, auxiliary second inlet ports and auxiliary second outlet ports defined at the second flow field side of the cathode plate remain inactive. Also, the third flow field side of the cathode bipolar plate is configured to supply and discharge a coolant for regulating thermal conditions within the fuel cell stack. The third flow field side comprises a third inlet port in fluid communication with the third flow field side and configured to receive coolant and distribute through at least one coolant inlet header. A third outlet port is in fluid communication with the third flow field side, configured to collect and discharge heated coolant through at least one coolant outlet header. Further, auxiliary third inlet ports and auxiliary third outlet ports are defined at the third flow field side of the cathode plate remain inactive.

In an embodiment, the first reactant fluid and the second reactant fluid is hydrogen and at least one of air and oxygen, respectively.

In an embodiment, the first flow field side a serpentine type of predefined pathway interposed between the at least one inlet header and the at least one outlet header; the second flow field side of the cathode bipolar plate is defined with a mesh type of predefined pathway interposed between the at least one inlet header and the at least outlet header; and wherein the third flow field side of the cathode bipolar plate is defined with a split type of predefined pathway interposed between the at least one coolant inlet header and the at least one coolant outlet header.

In an embodiment, the first flow field side is a serpentine type of predefined pathway interposed between the at least one inlet header and the at least one outlet header. Further, the second flow field side of the cathode bipolar plate is defined with a mesh type of predefined pathway interposed between the at least one inlet header and the at least outlet header. In an embodiment, the third flow field side of the cathode bipolar plate is defined with a split type of predefined pathway interposed between the at least one coolant inlet header and the at least one coolant outlet header.

In an embodiment, the anode bipolar plate of at least one of the plurality of cells is defined with an anode terminal current collector and the cathode bipolar plate of at least one of the plurality of cells is defined with a cathode terminal current collector.

In an embodiment, a first end plate and a second end plate are adapted to clamp and assemble the plurality of cells in the stacked configuration.

The accompanying drawings, which are incorporated in and constitute a part of this disclosure, illustrate exemplary embodiments and, together with the description, serve to explain the disclosed principles.
**Figure 1** illustrates a perspective exploded view of the fuel cell stack assembly having one or more fuel cell assembly, more specifically a triple cell assembly in a stacked configuration, in accordance with an embodiment of the present disclosure;
**Figure 2** illustrates an exploded view of a fuel cell assembly with anode bipolar plate, cathode bipolar plate and member electrode assembly, in accordance with an embodiment of the present disclosure;
**Figure 3a** illustrates a front view of a front view of the anode bipolar plate having a first flow field side and current collector of at least one first cell, in accordance with an embodiment of the present disclosure;
**Figure 3b** illustrates a perspective view of the anode bipolar plate having a non-channel side opposite to the first flow field side of the first cell, in accordance with an embodiment of the present disclosure;
**Figure 3c** illustrates a perspective view of the anode bipolar plate having the first flow field side of at least one of the first cell, a second cell, and a triple cell of the fuel stack, in accordance with an embodiment of the present disclosure;
**Figure 4a** illustrates a perspective view of the cathode bipolar plate having a second flow field side and current collector of at least one first cell, in accordance with an embodiment of the present disclosure;
**Figure 4b** illustrates a perspective view of the cathode bipolar plate having a third flow field side and current collector of at least one first cell, in accordance with an embodiment of the present disclosure;
**Figure 5a** illustrates a detailed view of an array of flow distributors having predefined pathway for the first, the second and the third flow field sides of the anode and cathode bipolar plates, in accordance with an embodiment of the present disclosure; and
**Figure 5b** illustrates a detailed view of the array of flow distributors, in accordance with an embodiment of the present disclosure.

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims. Additional illustrative embodiments are listed.

Embodiments of the present disclosure discloses a fuel cell stack assembly. The fuel cell stack assembly comprises an anode bipolar plate having a first flow field side and a cathode bipolar plate having a second flow field side and a third flow field side and each defined with a predefined pathway comprising an array of flow distributors. The array of flow distributors is formed by alternating at least one column of first triads and at least one column of second triads. This configuration enables maintaining uniform pressure distribution across the flow field sides for an improved electrochemical reaction between a fuel and an oxidant. Advantageously, this increases an output and the operational efficiency of the fuel cell stack assembly. Also, the configuration of the array of flow distributors provides improved surface area for heat transfer and prevents flooding of water across the flow field sides, wherein water is formed as a resultant of the electrochemical reaction. This results in eliminating blocking of the flow of the reactant or fuel within the predefined pathways.

It is to be noted that a person skilled in the art would be motivated from the present disclosure and modify construction of the fuel cell stack assembly. However, such modifications should be construed within the scope of the present disclosure. Accordingly, the drawings show only those specific details that are pertinent to understand the embodiments of the present disclosure, so as not to obscure the disclosure with details that will be readily apparent to those of ordinary skill in the art having benefit of the description herein.

The terms "comprise," "comprising," or any other variations thereof used in the disclosure, are intended to cover a non-exclusive inclusion, such that a system and method that comprises a list of components does not include only those components but may include other components not expressly listed or inherent to such system, method, or assembly, or device. In other words, one or more elements in a system or device proceeded by "comprises... a" does not, without more constraints, preclude the existence of other elements or additional elements in the system or device.

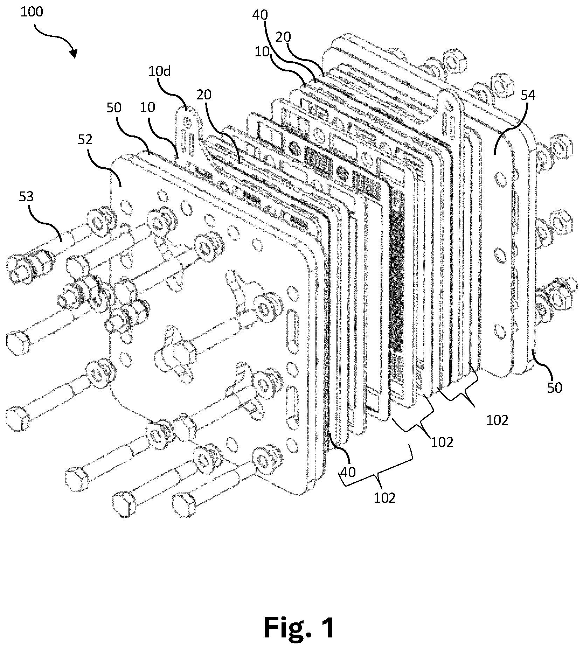

The following paragraphs describe the present disclosure with reference to Figures. 1 to Figures 5b. In the figures, the same element or elements which have similar functions are indicated by the same reference signs.

Referring to Figure 1 to 5b, which are exemplary embodiments of the present disclosure illustrating a fuel cell stack assembly (100) [alternatively referred as the "assembly (100)"].

The following detailed description is merely exemplary in nature and is not intended to limit application and uses. Furthermore, there is no intention to be bound by any theory presented in the preceding background or summary or the following detailed description. It is to be understood that the disclosure may assume various alternative orientations and step sequences, except where expressly specified to the contrary. It is also to be understood that the specific devices or components illustrated in the attached drawings and described in the following specification are simply exemplary embodiments of the inventive concepts defined in the appended claims. Hence, specific dimensions or other physical characteristics relating to the embodiments that may be disclosed are not to be considered as limiting, unless the claims expressly state otherwise. Hereinafter, preferred embodiments of the present disclosure will be described referring to the accompanying drawings. While some specific terms of "upper," "lower," "below," "above," "right," "left," "rear" or "front" and other terms containing these specific terms and directed to a specific direction will be used, the purpose of usage of these terms or words is merely to facilitate understanding of the present invention referring to the drawings. Accordingly, it should be noted that the meanings of these terms or words should not improperly limit the technical scope of the present invention.

Also, it is to be understood that the phraseology and terminology used herein is for description and should not be regarded as limiting. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. It is to be understood that this disclosure is not limited to the specific devices, methods, applications, conditions, or parameters described and/or shown herein and that the terminology used herein is to describe particular embodiments by way of example and is not intended to be limiting of the claimed invention. Hereinafter in the following description, various embodiments will be described. For purposes of explanation, specific configurations and details are outlined to provide a thorough understanding of the embodiments. However, it will also be apparent to one skilled in the art that the embodiments may be practiced without the specific details. Furthermore, well-known features may be omitted or simplified in order not to obscure the embodiment being described.

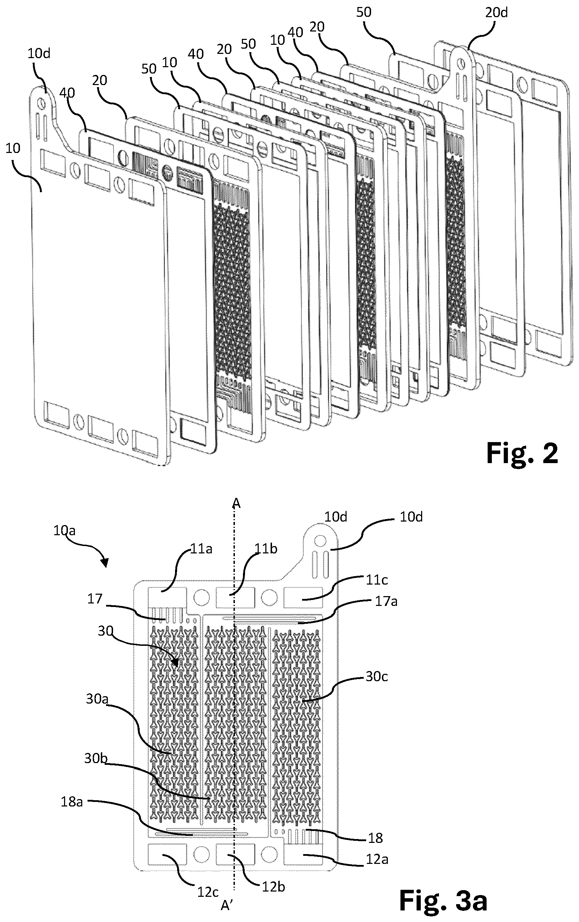

Referring to Figures 1 to 5b in conjunction, which illustrates various views of the fuel cell stack assembly (100) having a plurality of cells (102) and various components associated with the fuel cell stack assembly (100). The assembly (100) of the present disclosure may be used in passenger vehicles, heavy commercial vehicles, off-highway vehicles, maritime, aviation, unmanned aerial vehicles (UAVs), drones, backup power, space stations etc. for electric power generation by an electrochemical reaction.. Also, application of the assembly (100) elucidated going forward should not be construed as a limitation of the present disclosure. Figures. 2 to 5b schematically illustrates an embodiment of the assembly (100) comprising plurality of cells (102) or cell assemblies used in the fuel cell stack assembly (100). Hereinafter, features of the fuel cell stack assembly (100) having the plurality of cells (102) along with its working may be elucidated.

The fuel cell stack assembly (100) may comprise a plurality of cells arranged in stacked configuration. The fuel cell stack assembly (100) may be used to produce electricity. It will be understood that the teachings of the present disclosure are not limited to any particular electrochemical reaction cell.

The fuel cell stack assembly (100) comprises plurality of cells (102) arranged in a stacked configuration. Each cell of the plurality of cells (102) are stacked together. In an embodiment, the fuel stack assembly (100) may comprise triple cell assembly. Further, fuel cell stack assembly (100) with the triple cell assembly configuration may comprise a first cell and a second cell coupled to the first cell and a third cell coupled to the second cell as seen in Figure 1. Further, each cell of the plurality of cells (102) of the fuel cell stack assembly (100) of the present disclosure comprises an anode bipolar plate (10) and a cathode bipolar plate (20). In an embodiment, the first, second and third cells (102) each may comprise the anode bipolar plate (10) and the cathode bipolar plate (20).

Referring to Figure 1 and 2, the anode bipolar plate (10) of each cell of the plurality of cells (102) comprises a first flow field side (10a). Further, an opposite side of this first flow field side (10a) may be a non- channel side (10b). Also, the cathode bipolar plate (20) is having a second flow field side (20a), and opposite to the second flow field side (20a) is a third flow field side (20c). Further, each cell of the plurality cells (102) of the assembly (100) comprises a membrane electrode assembly [interchangeably referred as "MEA (40)"] (40) interposed between the first flow field side (10a) of the anode bipolar plate (10) and the second flow field side (20a) of the cathode bipolar plate (20). More particularly, the MEA (40) is interposed between the anode bipolar plate (10) and the cathode bipolar plate (20) such that the first and the second flow field sides (10a, 20a) are facing towards each other and the MEA (40) as seen in Figure 2.

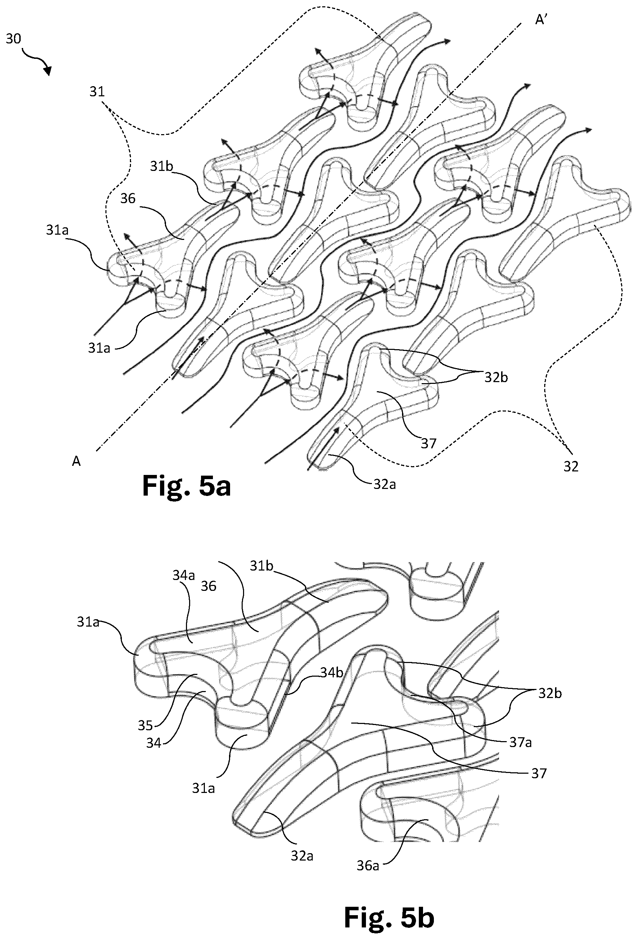

Further, referring to Figures 3a to 5b each of the first flow field side (10a) of anode bipolar plate (10), the second flow field side (20a) and the third flow field side (20c) of cathode bipolar plate (20) are defined with a predefined pathway. A portion of each the first flow field side (10a), the second flow field side (20a) and the third flow field (20c) is defined with the predefined pathway, more particularly at a substantially central portion of the first, the second and the third flow field side (10a, 20a, 20c). The predefined pathways comprises an array of flow distributors (30) disposed in a spaced-part configuration as seen in Figure 5a and 5b. In an embodiment, a first reactant fluid, a second reactant fluid and a coolant pass and flow through the predefined pathways formed by the array of flow distributors (30) in the first, second and third flow field sides (10a, 20b, 20c).

Referring to Figures 5a and 5b the array of flow distributors (30) is formed by alternating at least one column of first triads (31) and at least one column of second triads (32). The substantially central portion of each of the first flow field side (10a), the second flow field side (20a) and the third flow field (20c) may be defined with alternating at least one column of first triads (31) and at least one column of second triads (32) in an array. In an embodiment, the first triad (31) is defined with a configuration having two leading edges (31a) and one trailing edge (31b). More particularly, the two leading edges (31a) converge at a central section and extend to connected with one trailing edge (31b). In an embodiment, the first triad (31) may have a Y shaped configuration about a longitudinal axis (A-A') of the anode and cathode bipolar plate (10,20). Each column of the first triad (31) comprises a plurality of first triad configuration placed consecutively along the longitudinal axis (A-A').

The first triad (31) is a three-dimensional structure extending away from a surface of the anode and the cathode bipolar plates (10, 20), such that the first triad is defined with an upper surface (36) and peripheral side surfaces. The peripheral side surfaces are connected to the upper surface (36). Here the peripheral side surfaces are substantially formed at the two leading edges (31a) of the first triad (31). Further, the central section formed by the converging of the two leading edges (31a) is structured with a central surface (36a) which connects with a portion of the upper surface (36) of the first triad (31). The upper surface (36) is formed by an inclined portion at the trailing edge (31b) and a flat portion at the two leading edges (31a).

As illustrated in Figure 5b, the two leading edges (31a) of the first triad (31) are provided with a slot (34) that opens towards peripheral side surfaces of the first triad (31). The slot (34) is defined to extend from the central surface (36a) and lead connect and open towards the peripheral side surfaces of the first triad (31). In an embodiment, the slot (34) is defined with an inner surface (35) having a curved divergent profile. As seen, a flow path of a fluid along the first triads (31) is clearly illustrated in Figure 5a, wherein the fluid may enter into slot (34) and pass through the inner surface (35) having the curved divergent profile and exit or dispense from the slot extended towards peripheral side surfaces of the first triad (31). This configuration of the curved divergent profile assists in directing the first reactant and the second reactant smoothly, reducing friction losses. In an embodiment, the structure of the inner surface (35) provides a surface area for heat transfer and prevents accumulation of water generated during the electrochemical process. Also, this increases the surface area for fluid interaction of the first reactant, the second reactant and a coolant, providing improved reactant distribution and prevents stagnation zones. Additionally, the configuration of the slot (34) opening towards peripheral side surfaces ensures effective water drainage that is generated as a resultant of the electrochemical reaction. Thus, water accumulation in the first, second flow field sides (10a, 20a) of the anode and cathode bipolar plates (10,20) is prevented, thereby reducing a risk of flooding. Further, at the third flow field side (20c) optimal hydration levels are maintained via the coolant flow, thus improving fuel cell longevity. The optimal hydration lever is indicative of regulating moisture content, the coolant ensures that the anode and the cathode bipolar plates (10, 20) remains properly hydrated, which is essential for efficient proton conductivity and minimal electrical resistance. This controlled hydration prevents the MEA (40) from drying out, thereby reducing a risk of performance degradation, while also preventing excessive water accumulation that could obstruct first and second reactant flow.

Referring to Figure 5a and Figure 5b, the second triad (32) is defined with a configuration having one leading edge (32a) and two trailing edges (32b). More particularly, the second triad (32) may be in a manner of an inverted configuration of the first triad (31). The second triads (32) are having the two trailing edges (32b) that converging at a central section and further, are extending to connect with one leading edge (32a). In an embodiment, the first triad (32) may have an inverted Y shaped configuration about the longitudinal axis (A-A') of the anode and cathode bipolar plate (10,20). Each column of the second triad (32) comprises a plurality of second triads configuration placed consecutively along the longitudinal axis (A-A').

Similar to the first triad (31), the second triad (32) is also a three-dimensional structure extending away from a surface of the anode and the cathode bipolar plates (10, 20), such that the second triad (32) is defined with an upper surface (37) and peripheral side surfaces. The peripheral side surfaces are connected to the upper surface (37). Here the peripheral side surfaces are substantially formed at the two trailing edges (32b) of the second triad (32). Further, the central section formed by the converging of the two trailing edges (32b) is structured with a central surface (37a) which connects with a portion of the upper surface (37) of the second triad (32). The second triad (32) comprising the upper surface (37) is formed by an inclined portion at the trailing edges (32a) and a flat portion at the two leading edges (32b).

A flow path due the presence of the second triad (32) in an alternate arrangement with the first triad (31), the fluid may flow along a pathway that is formed between the first and the second triads (31, 32) as clearly illustrated in Figure 5a. In an embodiment, the fluid may pass along the peripheral side surfaces of the first and the second triads (31, 32). Additionally, the fluid dispensed from the slot (34) of the first triads (31) may also flow across peripheral side surfaces of the adjacent and consecutive the first and the second triads (31, 32), respectively. This configuration of the second triad (32) with respect to the first triad (31) ensures uniform fluid distribution across the first second, and third flow field sides (10a,20a,20c), thus aids in regulating a fluid velocity, reducing sudden pressure fluctuations. Further, upper surfaces (36,37) and peripheral side surfaces of the first and the second triads (31, 32) guide fluid movement to facilitate multiple drainage pathways, ensuring effective water evacuation from the flow field sides, thereby preventing turbulence and backflow. The fluid dispensed from the slot (34) of the first triad (31) may interact with the second triad (32), further improving flow uniformity and aids in heat dissipation, reducing thermal hotspots across the first second, and third flow field sides (10a,20a,20c).

In an embodiment, the upper surface (36,37) of the first triad (31) and the second triad (32) abuts with the membrane electrode assembly (40) in the stacked configuration. Therefore, the alternating arrangement of the first triads (31) and second triads (32) within the predefined pathway of the anode bipolar plate (10) and cathode bipolar plate (20) facilitate uniform distribution of a first reactant fluid and a second reactant fluid across the membrane electrode assembly (40) for the electrochemical reaction in the fuel cell stack assembly (100).

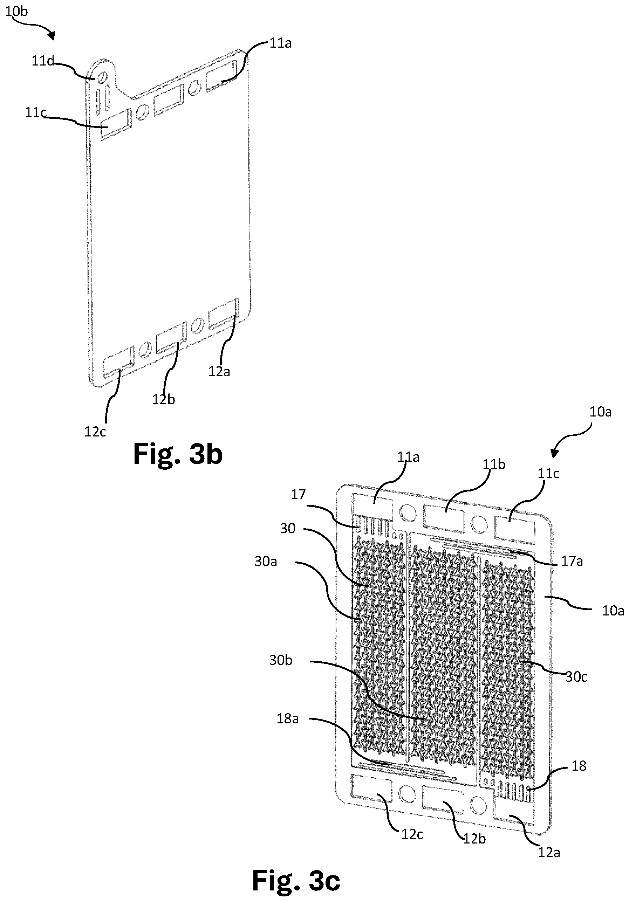

Referring to Figures 2 in conjunction with Figure 3a- 3c each of the anode bipolar plate (10) comprises the first flow field side (10a) defined with the array of flow distributors (30) formed by alternating at least one column of first triads (31) and at least one column of second triads (32). The anode bipolar plate (10) further defined with a first inlet port (11a) in fluid communication with the first flow field side (10a). As illustrated in Figure 3a and 3c, the first inlet port (11a) is provided at an upstream to the first reactant fluid flow of the central portion having the array of flow distributors (30). The first inlet port (11a) is in fluid communication with the array of flow distributors (30) via at least one inlet header (17). The first flow field side (10a) is configured to receive the first reactant fluid and distribute through at least one inlet header (17). The inlet header (17) provides guide paths to the first reactant fluid towards the array of flow distributors (30). In an embodiment, the first reactant fluid may be hydrogen gas. The anode bipolar plate (10) also comprises a first outlet port (12a) in fluid communication with the first flow field side (10a). The first outlet port (12a) is provided at a downstream to the first reactant fluid flow of the central portion and the first outlet port (12) is configured to discharge unreacted first reactant fluid at the first flow field side (10a) from at least one outlet header (18). The first outlet header (18) provides a guide path to the unreacted first reactant fluid leaving the array of flow distributors (30). The anode bipolar plate (10) also comprises auxiliary first inlet ports (11b, 11c), and auxiliary first outlet ports (12b, 12c). The auxiliary first inlet ports (11b, 11c) are configured adjacent to the first inlet port (11a) in the spaced apart configuration at the upstream of the array of flow distributors (30). Similarly, the auxiliary first outlet ports (12b, 12c) are configured adjacent to the first outlet port (12a) in the spaced apart configuration at the downstream of the array of flow distributors (30). In an operative configuration of the auxiliary first inlet ports (11b, 11c) and auxiliary first outlet ports (12b, 12c) remain inactive i.e., the flow of at least one of the first and second reactant fluid and the coolant may be substantially insignificant. In an embodiment, the first flow field side (10a) provides a serpentine type of predefined pathway interposed between the at least one inlet header (17) and the at least one outlet header (18). More specifically, the array of flow distributors (30) at the first flow field side (10a) are partitioned by a plurality of segments allowing the first reactant fluid received from the first inlet (11a) to pass through each segments of the plurality of segments.

In a constructional embodiment, the first flow field side (10a) of the anode bipolar plate may include a first segment (30a), a second segment (30b) and a third segment (30c) having the array of flow distributors (30) and each of the first segment (30a), the second segment (30b) and the third segment (30c) are arranged adjacent to each other. The flow path of the first reactant fluid i.e., hydrogen gas, may initiate at the inlet port (11a), where first reactant fluid enters the inlet header (17) at the upstream section of the anode bipolar plate (10). This inlet header (17) ensures uniform distribution of first reactant fluid across the flow field, preventing concentration variations and ensuring consistent reactant availability. As first reactant fluid progresses into the first segment (30a) of the array of flow distributors (30), the first reactant fluid is directed through the alternating configuration of first triads (31) and second triads (32). These structured configuration facilitate controlled first reactant fluid flow, induce localized turbulence, and promote effective hydrogen diffusion towards the MEA (40).

Upon traversing the first segment (30a), the first reactant fluid is collected at a first auxiliary outlet header (18a), located at the downstream region. This first auxiliary outlet header (18a) is structured as an intermediary transition zone, guiding the first reactant fluid to flow into a first auxiliary inlet header (17a) at the upstream section of the second segment (30b). By implementing this segmented approach, the first reactant fluid starvation is minimized, and the pressure distribution remains stable across the flow field side (10a). Within the second segment (30b), the first reactant fluid continues to flow through the structured array of distributors (30), where the slots (34) within the first triads (31) facilitate enhancing diffusion and reactant utilization at the MEA (40). The curved divergent profile of the slots (34) optimizes the first reactant fluid flow by reducing pressure drop and promoting uniform dispersion of the first reactant fluid across an active area.

Following the passage through the second segment (30b), the first reactant fluid is directed into the second auxiliary outlet header (18a), wherein the second auxiliary outlet header (18a) extends between the first segment (30a) and the second segment (30b) at the downstream section. This first reactant fluid subsequently feeds into the first auxiliary inlet header (17a) at the upstream section of the third segment (30c). In an embodiment, the first auxiliary inlet header (17a) extends between the second segment (30b) and the third segment (30c) at the upstream section. This distribution approach ensures that the electrochemical reaction zones receive an uninterrupted and evenly distributed supply of the first reactant fluid. As the first reactant fluid flows through the third segment (30c), it continues along the predefined pathways before being collected in the first outlet header (18) and finally discharged through the first outlet port (12a) after complete utilization in the reaction process as best seen in Figure 3a and 3c. Further, the opposite side of the first flow field side (10a) is the non- channel side. The non-channel side may be defined as flat surface with no array of flow distributors (30) as seen in Figure 3b.

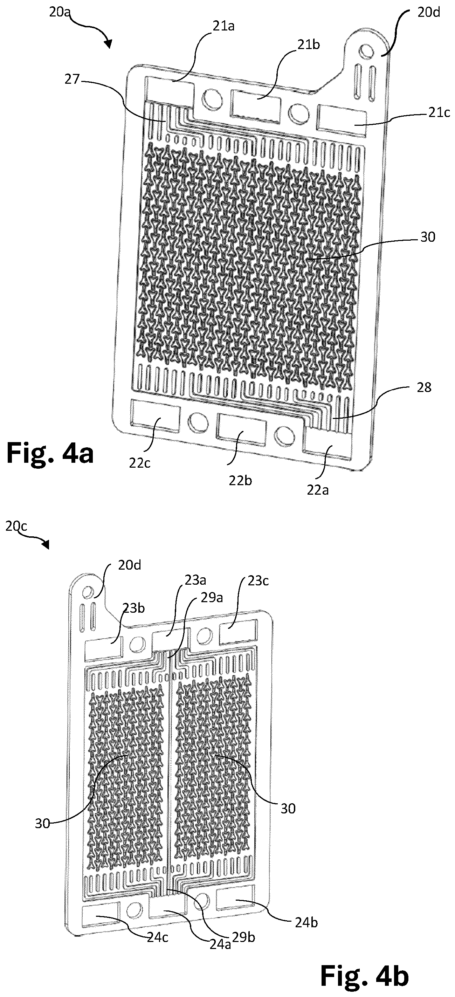

Referring to Figure 2 in conjunction with Figures 4a- 4b each of the cathode bipolar plate (20) comprises the second flow field side (20a) and third flow field side (20c) defined with the array of flow distributors (30) formed by alternating at least one column of first triads (31) and at least one column of second triads (32). The second flow field side (20a) is defined with a second inlet port (21a) in fluid communication with the second flow field side (20a). As illustrated in Figure 4a the second inlet port (21a) is provided at an upstream of the substantially central portion having the array of flow distributors (30). The second inlet port (21a) is in fluid communication with the array of flow distributors (30) via at least one inlet header (27). The second flow field side (20a) is configured to receive the second reactant fluid via the second inlet port (21a) and distribute through at least one inlet header (27). The inlet header (27) of the second flow field side (20a) provides guide paths to the second reactant fluid towards the array of flow distributors (30). In an embodiment, the second reactant fluid may be air or oxygen gas. The second flow field side (20a) also comprises a second outlet port (22a) in fluid communication with the second flow field side (20a). The second outlet port (22a) is provided at a downstream of the central portion and the second outlet port (22a) is configured to collect and discharge redundant second reactant fluid and derived products through at least one outlet header (28). The outlet header (28) provides a guide path to the redundant second reactant fluid and derived product leaving the array of flow distributors (30). The second flow field side (20a) also comprises auxiliary second inlet ports (21b, 21c), and auxiliary second outlet ports (22b, 22c). The auxiliary second inlet ports (21b, 21c) are configured adjacent to the second inlet port (21a) in the spaced apart configuration at the upstream of the array of flow distributors (30). Similarly, the auxiliary second outlet ports (22b, 22c) are configured adjacent to the second outlet port (22a) in the spaced apart configuration at the downstream of the flow distributors (30). In an operative configuration of the auxiliary second inlet ports (21b, 21c) and auxiliary second outlet ports (22b, 22c) remain inactive i.e., the flow of at least one of the first and second reactant fluid and the coolant may be substantially insignificant. In an embodiment, the second flow field side (20a) of the cathode bipolar plate (20) is defined with a mesh type of predefined pathway interposed between the at least one inlet header (27) and the at least outlet header (28). More specifically, the array of flow distributors (30) at the second flow field side (20a) are configured in a grid allowing the second reactant fluid received from the second inlet port (21a) to pass through each column of the first triad (31) and the second triads (32). In a constructional embodiment as seen in Figure 4a, as the second reactant fluid i.e., oxygen participates in the electrochemical reaction, it combines with protons from first flow field side (10a) of the anode bipolar plate (10) and the MEA (40) to form water as a byproduct. The redundant and unused oxygen, along with the generated water vapor, is expelled through the second outlet port (22a) via the outlet header (28). This outlet header (28) is structured to ensure efficient collection and removal of both redundant second reactant and reaction byproducts. Thus, the mixture of unused oxygen and water vapor is expelled via the second outlet port (22a), ensuring that the second flow field side (20a) maintains an optimal gas-phase balance while preventing performance degradation due to excessive water buildup.

Referring to Figure 4b, the third flow field side (20c) is defined with a third inlet port (23a) in fluid communication with the third flow field side (20c). As illustrated in Figure 4b and the third inlet port (23a) is provided at an upstream of the central portion having the array of flow distributors (30). The third inlet port (23a) is in fluid communication with the array of flow distributors (30) via at least one coolant inlet header (29a). The third flow field side (20c) is configured to receive the coolant via the third inlet port (23a) and distribute through at least one coolant inlet header (29a). The coolant inlet header (29a) of the third flow field side (20c) provides guide paths to the coolant towards the array of flow distributors (30). In an embodiment, the coolant fluid may be a liquid or vapor, or any heat-transfer fluid used to regulate the temperature of the cathode bipolar plate (20) during electrochemical process. The third flow field side (20c) also comprises a third outlet port (24a) in fluid communication with the third flow field side (20c). The third outlet port (24a) is provided at a downstream of the central portion and the third outlet port (24a) is configured to collect and discharge heated coolant through at least one coolant outlet header (29b). The coolant outlet header (29b) provides a guide path to the heated coolant leaving the array of flow distributors (30). The third flow field side (20a) also comprises auxiliary third inlet ports (23b, 23c), and auxiliary third outlet ports (24b, 24c). The auxiliary third inlet ports (23b, 23c) are configured either sides of the third inlet port (23a) in the spaced apart configuration at the upstream of the array of flow distributors (30). Similarly, the auxiliary third outlet ports (24b, 24c) are configured either sides of the third outlet port (24a) in the spaced apart configuration at the downstream of the flow distributors (30).

In an operative configuration, the auxiliary third inlet ports (23b, 23c) and auxiliary third outlet ports (24b, 24c) remain inactive i.e., the flow of at least one of the first and second reactant fluid and the coolant may be substantially insignificant. In an embodiment, the third flow field side (20c) of the cathode bipolar plate (20) is defined with a split type of predefined pathway interposed between the at least one coolant inlet header (29a) and the at least one coolant outlet header (29b).

In a constructional embodiment, the coolant enters the third flow field side (20c) of the cathode bipolar plate (20) through the third inlet port (23a), where it is evenly distributed via the coolant inlet header (29a). The flow is split into two segments, ensuring uniform thermal coverage across the cathode bipolar plate (20). As the coolant moves through the array of flow distributors (30), the coolant absorbs the heat that is generated during the electrochemical reaction, further preventing localized overheating. The heated coolant is discharged through the third outlet port (24a), guided by the coolant outlet header (29b), which ensures efficient removal of thermal energy.. Therefore, this split type path predefined pathway enables the coolant to flow in two separate segments, effectively covering a larger surface area of the cathode bipolar plate (20). This structure enhances the uniformity of heat dissipation while maintaining low thermal resistance across the cathode bipolar plate. Additionally, the coolant inlet header (29a) may function as a manifold to uniformly distribute the coolant across the array of distributors (30) of split segments. The structured distribution ensures that thermal gradients across the cathode bipolar plate (20) are minimized, enhancing efficiency and preventing localized overheating. Similarly, the coolant outlet header (29b) allows ease of collection of the heated coolant and preventing any retention of the coolant.

In an embodiment, the anode bipolar plate (10) of at least one of the plurality of cells (102) is defined with an anode terminal current collector (10d), and the cathode bipolar plate (20) of at least one of the plurality of cells (102) is defined with a cathode terminal current collector (20d). More specifically, each individual cell consists of the anode bipolar plate (10) and the cathode bipolar plate (20). These bipolar plates (10, 20) facilitate the transport of first and second reactant gases, enable efficient electron flow, and provide structural integrity to the assembly (100). One of the cell of the plurality of cells (102) of the assembly (100) having the anode bipolar plate (10) is equipped with an anode terminal current collector (10d), which serves as the primary interface for collecting and transmitting electrons generated at the anode bipolar plate (10). At the first flow field side (10a), first reactant fluid i.e., hydrogen gas undergoes electrochemical oxidation, releasing protons and electrons. While protons pass through the MEA (40) to the cathode bipolar plate (20), electrons are conducted through the anode terminal current collector (10d) and directed into an external circuit, generating an electric current. This anode terminal current collector (10d) is typically structured with high electrical conductivity, corrosion resistance, and minimal contact resistance to maximize efficiency.

Similarly, one of the cells of the plurality of cells (102) of the assembly (100) having the cathode bipolar plate (20) is defined with cathode terminal current collector (20d), configured for receiving the returning electrons from the external circuit and delivering them to the second flow field side (20a). At the cathode bipolar plate (20), these electrons participate in the oxygen reduction reaction (ORR), where second reactant fluid i.e., the oxygen combines with protons and electrons to form water as a derived product. The cathode terminal current collector (20d) ensures optimal electron transfer while maintaining mechanical and thermal stability in the fuel cell stack assembly (100). In an embodiment, the anode terminal current collector (10d) is integrated with at least one anode bipolar plate (10) and the cathode terminal current collector (20d) is integrated with at least one cathode bipolar plate (20).

Further, the fuel cell stack assembly (100) is enclosed by at least one first end plate (52) and one second end plate (54), which provide mechanical support and clamping to maintain the stacked configuration. The end plates (52, 54) may include a plurality of cooling channels to facilitate coolant flow and fastening holes for securing them with fasteners (53). Additionally, at least one insulation plate [not specifically shown in Figures] is positioned between the anode terminal current collector (10d) and the first end plate (52) and between the cathode terminal current collector (20d) and the second end plate (54) to prevent short circuits during operation. The assembly (100) includes at least one coolant gasket (50) positioned between adjacent cells of the plurality of cells (102). This coolant gasket (50) ensures sealing, preventing coolant leakage while maintaining efficient thermal management within the assembly (100).

In an operative configuration, the fuel cell stack assembly (100) operates by facilitating an electrochemical reaction between a first reactant fluid (hydrogen gas) and a second reactant fluid (oxygen) across the membrane electrode assembly (40) within each of the plurality of cells (102). The first reactant fluid enters through the first inlet port (11a) of the anode bipolar plate (10) and is distributed through at least one inlet header (17) to the first flow field side (10a). The predefined pathway, incorporating the array of flow distributors (30) with alternating columns of first triads (31) and second triads (32), ensures uniform distribution of hydrogen. The hydrogen then undergoes oxidation, releasing electrons and forming protons.

Simultaneously, the second reactant fluid, oxygen or air, enters through the second inlet port (21a) of the cathode bipolar plate (20) and is distributed through at least one inlet header (27) to the second flow field side (20a). The predefined pathway on the second flow field side (20a), structured with a mesh-type flow distribution, facilitates optimal diffusion of oxygen across the membrane electrode assembly (40). Oxygen molecules react with the incoming protons and electrons at the second flow field side (20a), forming water as the derive product, which is discharged through the second outlet port (22a) and at least one outlet header (28). The coolant at the third field flow field side (20c) of the cathode bipolar plate (20) regulates the thermal conditions of the fuel cell stack assembly (100). The coolant enters through the third inlet port (23a) of the cathode bipolar plate (20) and is distributed via at least one coolant inlet header (29a) across the third flow field side (20c), which features a split type predefined pathway. The coolant absorbs excess heat generated during the electrochemical reaction and discharges through the third outlet port (24a) and at least one coolant outlet header (29b), ensuring optimal operating temperature. Additionally, at least one coolant gasket (50) is positioned between adjacent cells of the plurality of cells (102) to prevent coolant leakage and enhance thermal management. The electrical output is collected via the anode terminal current collector (10d) and cathode terminal current collector (20d), ensuring efficient conduction of electrons through the external circuit, generating usable electrical energy. The fuel cell stack assembly (100) is clamped together by the first end plate (52) and the second end plate (54), maintaining the structural integrity and alignment of the plurality of cells (102). This configuration enhances the durability and efficiency of the fuel cell system, enabling consistent power generation.

By integrating a predefined pathway on the first flow field side (10a) and second flow field side (20a) and the third flow field side (20c), structured with alternating columns of first triads (31) and second triads (32), ensures uniform distribution of the first reactant fluid and second reactant fluid and the coolant across the membrane electrode assembly (40). This enhances electrochemical efficiency and prevents concentration losses.

In another embodiment, the assembly (100) of the present disclosure having the slots (34) in the first triad (31) with inner surface (35) defining a curved divergent profile, prevents water accumulation and facilitating effective water drainage. This minimizes flooding and ensures continuous operation.

Moreover, the optimized predefined pathways and flow distributors (30) ensure low-pressure drops while maintaining high reactant velocity, thus minimizing losses, reducing the energy required for reactant flow and cooling.

In another embodiment, the flow distributors (30) are structured with alternating first triads (31) and second triads (32) to create multiple reaction zones, enhancing reactant exposure to the active sites of the membrane electrode assembly (40). The first triad (31) includes two leading edges (31a) with the slot (34) that directs reactant flow towards the reaction zone while also aiding in water removal. Further, the second triad (32), with single leading edge (32a) and two trailing edges (32b), enhances reactant mixing and diffusion, further improving electrochemical conversion.

It is intended that the disclosure and examples be considered as exemplary only, with a true scope of disclosed embodiments being indicated by the following claims.

## Claims

1. A fuel cell stack assembly (100) comprising:
a plurality of cells (102) arranged in a stacked configuration, wherein each cell of the plurality of cells (102) comprises:
an anode bipolar plate (10) having a first flow field side (10a);
a cathode bipolar plate (20) having a second flow field side (20a) and a third flow field side (20c) opposing the second flow field side (20a),
wherein each of the first flow field side (10a) of anode bipolar plate (10), the second flow field side (20a) and the third flow field side (20c) of cathode bipolar plate (20) are defined with a predefined pathway comprising an array of flow distributors (30), wherein the array of flow distributors (30) are formed by alternating at least one column of first triads (31) and at least one column of second triads (32); and
a membrane electrode assembly (40) interposed between the first flow field side (10a) of the anode bipolar plate (10) and the second flow field side (20a) of the cathode bipolar plate (20),
wherein an alternating arrangement of the first triads (31) and second triads (32) within the predefined pathway of the anode bipolar plate (10) and cathode bipolar plate (20) facilitate uniform distribution of a first reactant fluid and a second reactant fluid across the membrane electrode assembly (40) for an electrochemical reaction in the fuel stack (100).

2. The fuel stack assembly (100) as claimed in claim 1, wherein the first triad (31) is defined with a configuration having two leading edges (31a) and one trailing edge (31b), wherein the two leading edges (31a) of the first triad (31) are provided with a slot (34) that opens towards peripheral sides of the first triad (31).

3. The fuel stack assembly (100) as claimed in claim 2, wherein the slot (34) is defined with an inner surface (35) having a curved divergent profile, wherein the inner surface (35) provides a surface area for heat transfer and prevent accumulation of water generated during the electrochemical process.

4. The fuel stack assembly (100) as claimed in claim 1, wherein the second triad (32) is defined with a configuration having one leading edge (32a) and two trailing edges (32b).

5. The fuel stack assembly (100) as claimed in claim 3, wherein the first triad (31) comprises an upper surface (36) formed by an inclined portion at the trailing edge (31b) and a flat portion at the two leading edges (31a) and the second triad (32) comprises an upper surface (37) formed by an inclined portion at the leading edge (32a) and a flat portion at the two leading edges (32b), wherein the upper surface (36,37) of the first triad (31) and the second triad (32) abuts with the membrane electrode assembly (40).

6. The fuel stack assembly (100) as claimed in claim 1, wherein each of the
the anode bipolar plate (10) comprises,
the first flow field side (10a) to facilitate a supply and removal of the first reactant fluid;
a first inlet port (11a) in fluid communication with the first flow field side (10a), configured to receive the first reactant fluid and distribute through at least one inlet header (17);
a first outlet port (12a) in fluid communication with the first flow field side (10a) configured to discharge unreacted first reactant fluid at the first flow field side (10a) from at least one outlet header (18); and
auxiliary first inlet ports (11b, 11c), and auxiliary first outlet ports (12b, 12c) are defined on the anode plate (10) remain inactive; and
the cathode bipolar plate (20) comprises;
the second flow field side (20a) to supply and removal of a second reactant fluid, wherein the second flow field side (20a) comprises;
a second inlet port (21a) in fluid communication with the second flow field side (20a) is configured to receive the second reactant fluid and distribute through at least one inlet header (27);
a second outlet port (22a) in fluid communication with the second flow field side (20a) is configured to collect and discharge redundant second reactant fluid and derived products through at least one outlet header (28);
auxiliary second inlet ports (21b, 21c), and auxiliary second outlet ports (22b, 22c) defined at the second flow field side (20a) of the cathode plate (10) remain inactive; and
the third flow field side (20c) of the cathode bipolar plate (20) to supply and discharge a coolant for regulating thermal conditions within the fuel cell stack (100), wherein the third flow field side (20c) comprises;
a third inlet port (23a) in fluid communication with the third flow field side (20c), configured to receive the coolant and distribute through at least one coolant inlet header (29a);
a third outlet port (24a) in fluid communication with the third flow field side (20c), configured to collect and discharge heated coolant through at least one coolant outlet header (29b); and
auxiliary third inlet ports (23b, 23c), and auxiliary third outlet ports (24b, 24c) defined at the third flow field side (20c) of the cathode plate (10) remain inactive.

7. The fuel stack assembly (100) as claimed in claim 1, the first reactant fluid and the second reactant fluid is hydrogen and at least one of air and oxygen, respectively.

8. The fuel stack assembly (100) as claimed in claim 1, wherein the first flow field side (10a) a serpentine type of predefined pathway interposed between the at least one inlet header (17) and the at least one outlet header (18); the second flow field side (20a) of the cathode bipolar plate (20) is defined with a mesh type of predefined pathway interposed between the at least one inlet header (27) and the at least outlet header (28); and wherein the third flow field side (20c) of the cathode bipolar plate (20) is defined with a split type of predefined pathway interposed between the at least one coolant inlet header (29a) and the at least one coolant outlet header (29b).

9. The fuel stack assembly (100) as claimed in claim 1, wherein the anode bipolar plate (10) of at least one of the plurality of cells (102) is defined with an anode terminal current collector (10d), and the cathode bipolar plate (20) of at least one of the plurality of cells (102) is defined with a cathode terminal current collector (20d).

10. The fuel stack assembly (100) as claimed in claim 1, comprises a first end plate (52) and a second end plate (54) adapted to clamp and assemble the plurality of cells (102) in the stacked configuration.
